# EUROPEAN PATENT SPECIFICATION

(11) **EP 3 573 424 B1**
(45) Date of publication and mention of the grant of the patent: **08.09.2021**
(21) Application number: 18757096.5
(22) Date of filing: 21.02.2018
(51) Int. Cl.: H04W 74/08, H04W 88/10, H04B 1/00, H04B 1/44, H04L 5/00, H04L 27/00, H04W 16/14, H04W 88/06

(54) **APPARATUS AND METHOD FOR SHARING RADIO FREQUENCY PATH IN WIRELESS COMMUNICATION SYSTEM**
VORRICHTUNG UND VERFAHREN ZUR GEMEINSAMEN NUTZUNG EINES FUNKFREQUENZWEGS IN EINEM DRAHTLOSKOMMUNIKATIONSSYSTEM
APPAREIL ET PROCÉDÉ DE PARTAGE DE TRAJET DE FRÉQUENCE RADIO DANS UN SYSTÈME DE COMMUNICATION SANS FIL

(30) Priority: 22.02.2017 KR 20170023457
(43) Date of publication of application: 27.11.2019
(73) Proprietor: Samsung Electronics Co., Ltd., Suwon-si, Gyeonggi-do 16677 (KR)
(72) Inventor: SHIN, Yi Sup, Gwacheon-si Gyeonggi-do 13831 (KR); BAIK, Kyunghoon, Seoul 06506 (KR); SUNG, Junguk, Suwon-si Gyeonggi-do 16509 (KR); SON, Juhyun, Suwon-si Gyeonggi-do 16693 (KR); LEE, Yunkyung, Suwon-si Gyeonggi-do 16676 (KR); IM, Yongsik, Yongin-si Gyeonggi-do 17103 (KR); CHOI, Junyoung, Suwon-si Gyeonggi-do 16698 (KR)
(74) Representative: Gulde & Partner
(86) International application number: PCT/KR2018/002138
(87) International publication number: WO 2018/155906

(56) References cited:
- WO-A1-2016/048798
- WO-A1-2016/182390
- WO-A1-2017/026982
- KR-A- 20160 121 390
- US-A1- 2013 072 135
- US-A1- 2015 296 560
- US-A1- 2016 100 318
- US-A1- 2016 119 846
- Monica Paolini: "TE Unlicensed and Wi-Fi: Moving beyond coexistence", , 3 June 2016 (2016-06-03), pages 1-85, XP055306979, Retrieved from the Internet: URL:https://ecfsapi.fcc.gov/file/600010766 64.pdf [retrieved on 2016-09-30]

## Description

### Technical Field

The disclosure relates to a wireless communication system, and more particularly, to a method and apparatus for sharing a radio frequency (RF) path in a wireless communication system.

### Background Art

As various communication technologies have developed and users demands for services have been increased, the performance of communication systems has also been improved. For example, different radio access technologies (RAT) may be supported for a single base station. In this instance, the base station may accept various terminals that support different RATs.

When different RATs are supported for a single base station, the base station needs to include two or more hardware modules (e.g., a modem) for signal processing. Accordingly, generally, radio frequency (RF) paths which are dependent upon respective hardware modules may be designed. Accordingly, the cost of manufacturing a base station and a designed space may be increased in proportion to the number of supported RATs.

Document US2016119846A1 discloses a wireless entity being part of a base station where LTE-U and Wi-Fi modules are co-located. The base station uses an adaptive ON/OFF mechanism and can turn one of the modules on, depending on the load in the cell etc. When both entities are turned on (communication mode 5), the Wi-Fi module performs LBT and informs the LTE module when there are free resources, so that the LTE module can perform data transmission.

### Disclosure of Invention

### Technical Problem

Therefore, the disclosure has been made in view of the above-mentioned problems, and an aspect of the disclosure is to provide a method and apparatus for sharing a radio frequency (RF) path in a wireless communication system.

An aspect of the disclosure is to provide a method and apparatus for controlling a common RF path in a wireless communication system.

An aspect of the disclosure is to provide a method and apparatus for controlling a common RF path on the basis of sensing and scanning in a wireless communication system.

An aspect of the disclosure is to provide a method and apparatus for configuring a secondary cell for carrier aggregation (CA) in an unlicensed band in a wireless communication system.

### Solution to Problem

The invention is set out in the appended set of claims.

In accordance with an aspect of the disclosure, a base station apparatus in a wireless communication system may include: a first processing unit configured to process a signal for performing communication based on a first radio access technology (RAT); a second processing unit configured to process a signal for performing communication based on a second radio access technology (RAT); and a radio frequency (RF) path shared by the first processing unit and the second processing unit.

In accordance with another aspect of the disclosure, an operation method of a base station in a wireless communication system may include: transmitting, via a radio frequency (RF) path, a signal which is generated using a first processing unit and is used for performing communication based on a first radio access technology (RAT); and transmitting, via the RF path, a signal which is generated using a second processing unit and is used for performing communication based on a second radio access technology (RAT), wherein the RF path is shared by the first processing unit and the second processing unit.

Here, the RF path is shared by the first processing unit and the second processing unit, the first RAT and the second RAT are used for communication in at least partially identical frequency bands, and the first RAT uses an unlicensed band based on sensing.

When a period for transmitting a probe signal for the second RAT arrives, the second processing unit is connected to a transmission front end of the RF path. Then, both the first and the second processing units are connect to a reception front end of the RF path in order to perform sensing for the first RAT, while scanning a response to the probe signal.

### Advantageous Effects of Invention

A method and an apparatus according to various embodiments of the disclosure may share a radio frequency (RF) path for communication in at least partially identical frequency bands among different pieces of signal processing hardware, and the cost of manufacturing devices and the space for receiving circuits may be reduced.

Effects which can be acquired by the disclosure are not limited to the above described effects, and other effects that have not been mentioned may be clearly understood by those skilled in the art from the following description.

### Brief Description of Drawings

FIG. 1 is a diagram illustrating a wireless communication system according to various embodiments of the disclosure;
FIG. 2 is a block diagram illustrating a configuration of a base station in a wireless communication system according to various embodiments of the disclosure;
FIG. 3 is a block diagram illustrating a configuration of a wireless communication unit of a base station in a wireless communication system according to various embodiments of the disclosure;
FIG. 4 is a diagram illustrating a method of operating a base station in a wireless communication system according to various embodiments of the disclosure;
FIG. 5A is a diagram illustrating a method of performing sensing and scanning in a wireless communication system according to various embodiments of the disclosure;
FIG. 5B is a diagram illustrating an example of a sensing and scanning timing in a wireless communication system according to various embodiments of the disclosure;
FIG. 6A is a diagram illustrating another method of performing sensing and scanning in a wireless communication system according to various embodiments of the disclosure;
FIG. 6B is a diagram illustrating another example of a sensing and scanning timing in a wireless communication system according to various embodiments of the disclosure; and
FIG. 7 is a diagram illustrating a method of operating a base station in a wireless communication system according to various embodiments of the disclosure.

### Best Mode for Carrying out the Invention

The terms used in the disclosure are only used to describe specific embodiments, and are not intended to limit the disclosure. A singular expression may include a plural expression unless they are definitely different in a context. Unless defined otherwise, all terms used herein, including technical and scientific terms, have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software and thus, the various embodiments of the disclosure may not exclude the perspective of software.

The disclosure relates to a method and apparatus for controlling a radio frequency (RF) path in a wireless communication system. Particularly, the disclosure describes a technology for controlling a common RF path that is shared to support different radio access technologies (RATs) in a wireless communication system.

In the descriptions, terms indicating network entities, terms indicating elements of a device, terms indicating communication technology, and the like are used for ease of description. Accordingly, the disclosure is not limited to the following terms and other terms having the same technical meaning may be used.

Also, although the disclosure describes various embodiments using terms used in some communication standards (e.g. long term evolution (LTE) system and a LTE-advanced (LTE-A)), this is merely an example for description. Various embodiments of the disclosure may be easily modified and applied to other communication systems.

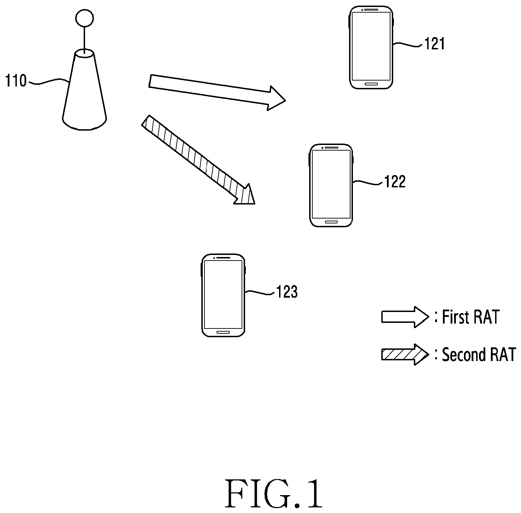

FIG. 1 is a diagram illustrating a wireless communication system according to various embodiments of the disclosure. FIG. 1 illustrates a base station 110, a terminal 121, a terminal 122, and a terminal 123, as some of the nodes that use radio channels in a wireless communication system. Although FIG. 1 illustrates a single base station, another base station which is the same as or similar to the base station 110 may be further included.

The base station 110 may be a network infrastructure that provides radio access to terminals 121, 122, and 123. The base station 110 may have coverage defined by a predetermined geographical area on the basis of a distance to which the base station 110 is capable of transmitting a signal. The base station 110 may be referred to as an access point (AP), an eNodeB (eNB), a 5th generation node, a wireless point, a transmission/reception point (TRP), or other terms having meanings equivalent thereto, in addition to the base station 110.

Each of the terminals 121, 122, and 123 may be a device used by a user, and may communicate with the base station 110 via a radio channel. Depending on the case, at least one of the terminals 121, 122, and 123 may operate without operation by a user. That is, at least one of the terminals 121, 122, and 123 may be a device that performs machine type communication (MTC), and may not be carried by a user. Each of the terminals 121, 122, and 123 may be referred to as a user equipment (UE), a mobile station, a subscriber station, a remote terminal, a wireless terminal, a user device, or other terms having meanings equivalent thereto, in addition a terminal.

According to an embodiment, the base station 110 may support two or more RATs. In other words, the base station 110 may support a first RAT and a second RAT. For example, the first RAT may comply with the LTE standard, and the second RAT may comply with the Wi-Fi standard. In other words, the second RAT may include the wireless local area network (WLAN) standard. Accordingly, the base station 110 may provide a communication service based on the first RAT to a terminal that supports the first RAT, and may provide a communication service based on the second RAT to a terminal that supports the second RAT.

Also, according to an embodiment, the base station 110 may provide a small cell. For example, the base station 110 may provide a service within a limited geographical range such as home, an office, a shopping mall, or the like. In this instance, the base station 110 may be connected to a core network via an Ethernet. In addition, although not illustrated in FIG. 1, a wireless communication system may further include at least one other base station that provides a macro cell.

Various embodiments are related to the base station 110 illustrated in FIG. 1. According to an embodiment, the first RAT supported by the base station 110 may be used according to the LTE-unlicensed (LTE-U) standard that uses an unlicensed band. In other words, the base station 110 may perform communication according to the license-assisted access using LTE (LAA) technology. Here, the LAA technology uses the licensed band of LTE as an anchor frequency, and use a licensed band and an unlicensed band as a single band via carrier aggregation (CA).

Among the terminals 121, 122, and 123, at least one terminal that supports the LTE standard may access a network via a licensed band. In this instance, the base station 110 may aggregate a licensed band and an unlicensed band via CA depending on the situation, and may offload the traffic of the licensed band on the unlicensed band. In the case of CA, the licensed band is used as an anchor, a primary cell (PCell) is configured in the licensed band, and a secondary cell (SCell) is configured in the unlicensed band. That is, the unlicensed band is activated via only CA, and may not be solely used for communication based on the LTE standard.

The main issue in LAA is coexistence with a Wi-Fi system in an unlicensed band, and a system may be designed in consideration of regulatory requirements applied to the corresponding frequency band (e.g., a 5GHz band). In the case of a base station having a Wi-Fi function, Wi-Fi communication and LTE communication may be independently performed. Accordingly, RF transmission/reception paths are separated according to RATs corresponding thereto. However, a system that supports LAA may enable a Wi-Fi service and an LTE service to coexist using a listen before talk (LBT) algorithm. Accordingly, various embodiments of the disclosure may propose a structure that shares an RF path for LTE and an RF path for Wi-Fi, and an operation method therefor.

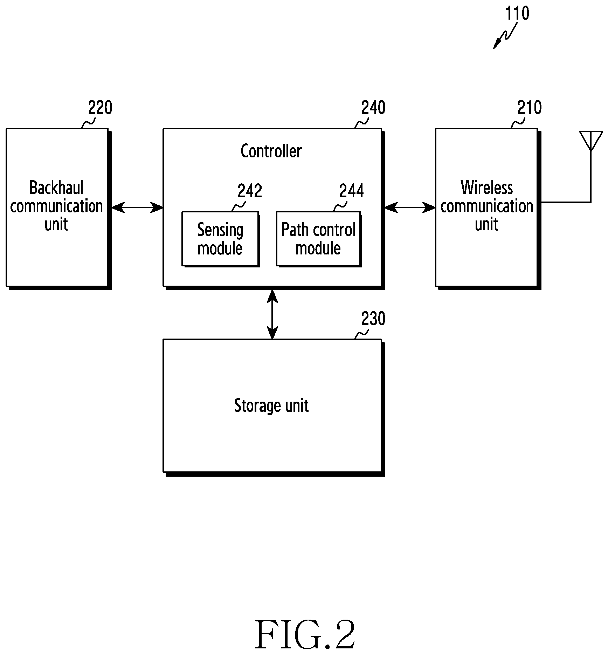

FIG. 2 is a block diagram illustrating a configuration of a base station in a wireless communication system according to various embodiments of the disclosure. The configuration of FIG. 2 may be understood as the configuration of the base station 110. The term "...unit" or the ending of a word, such as "...or", "...er", or the like may indicate a unit of processing at least one function or operation, and this may be embodied by hardware, software, or a combination of hardware and software.

Referring to FIG. 2, the base station 110 may include a wireless communication unit 210, a backhaul communication unit 220, a storage unit 230, and a controller 240.

The wireless communication unit 210 performs functions of transmitting or receiving a signal via a radio channel. For example, the wireless communication unit 210 performs a function of conversion between a baseband signal and a bit stream according to the physical layer standard of a system. For example, in the case of data transmission, the wireless communication unit 210 generates complex symbols by encoding and modulating a transmission bit stream. Also, in the case of data reception, the communication unit 210 restores a reception bit stream by demodulating and decoding a baseband signal. Also, the wireless communication unit 210 up-converts a baseband signal into an RF band signal and transmits the same via an antenna, and down-converts an RF band signal received via an antenna into a baseband signal.

To this end, the wireless communication unit 210 may include a transmission filter, a reception filter, an amplifier, a mixer, an oscillator, a digital-to-analog convertor (DAC), an analog-to-digital convertor (ADC), and the like. Also, the wireless communication unit 210 may include a plurality of transmission/reception paths. In addition, the wireless communication unit 210 may include at least one antenna array including a plurality of antenna elements. From the perspective of hardware, the wireless communication unit 210 may be configured as a digital unit and an analog unit. The analog unit may include a plurality of sub-units depending on an operating power, an operating frequency, or the like. Also, the wireless communication unit 210 may include a plurality of signal processing modules for supporting two or more RATs. In this instance, the plurality of signal processing modules may share a single RF path.

The wireless communication unit 210 may transmit or receive a signal as described above. In this instance, the wireless communication unit 210 may be referred to as a "transmitter", "receiver", or "transceiver". Also, in the following descriptions, the transmission and reception performed via a radio channel may be used as a meaning including the fact that the above-described processing is performed by the wireless communication unit 210.

The backhaul communication unit 220 provides an interface for performing communication with other nodes within a network. That is, the backhaul communication unit 220 may convert, into a physical signal, a bit stream transmitted from the base station 110 to another node, for example, another access node, another base station, an upper node, a core network, and the like, and may convert a physical signal received from the other node into a bit stream.

The storage unit 230 may store data, such as a basic program for operating the base station 110, an application program, configuration information, and the like. The storage unit 230 may be configured as a volatile memory, a non-volatile memory, or a combination of a volatile memory and a non-volatile memory. In addition, the storage unit 230 may provide data stored therein in response to a request from the controller 240.

The controller 240 may control overall operation of the base station 110. For example, the controller 240 may transmit and receive a signal via the wireless communication unit 210 or the backhaul communication unit 220. Further, the controller 240 records data in the storage unit 230 and reads the recorded data. To this end, the controller 240 may include at least one processor. According to various embodiments, the controller 240 may include a sensing module 242 for identifying whether to use an unlicensed band, and a path control module 244 for controlling the connection state of paths between antennas and signal processing modules included in the wireless communication unit 210. Here, the sensing module 242 and the path control module 244 may be a set of instructions or codes stored in the storage unit 230, may be an instruction/code at least temporarily residing in the controller 240 or a storage space that stores an instruction/code, or may be a part of a circuit (circuitry) included in the controller 240. For example, the controller 240 may perform control so that the base station 110 performs operations according to various embodiments.

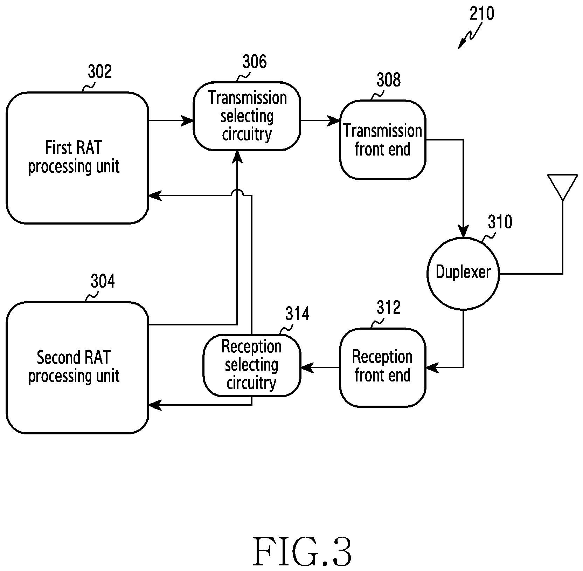

FIG. 3 is a block diagram illustrating a configuration of a wireless communication unit of a base station in a wireless communication system according to various embodiments of the disclosure. FIG. 3 illustrates the detailed configuration of the wireless communication unit 210 of the base station 110 of FIG. 2. The term "...unit" or the ending of a word, such as "...or", "...er", or the like may indicate a unit of processing at least one function or operation, and this may be embodied by hardware, software, or a combination of hardware and software.

Referring to FIG. 3, the wireless communication unit 210 may include a first RAT processing unit 302, a second RAT processing unit 304, a transmission selecting circuitry 306, a transmission front end 308, a duplexer 310, a reception front end 312, and a reception selecting circuitry 314.

The first RAT processing unit 302 may generate and interpret a message and a signal according to each protocol layer on the basis of the standard of the first RAT. For example, the first RAT may include the LTE or LTE-U standard. The second RAT processing unit 304 may generate and interpret a message and a signal according to each protocol layer on the basis of the standard of the second RAT. For example, the second RAT may include the Wi-Fi standard. Each of the first RAT processing unit 302 and the second RAT processing unit 304 may provide a baseband processing function and an analog-digital conversion function which corresponds to a corresponding standard. The first RAT processing unit 302 and the second RAT processing unit 304 may process signals for communication in at least partially identical frequency bands. Accordingly, the first RAT processing unit 302 and the second RAT processing unit 304 may share an RF path including the transmission front end 308 and the reception front end 312 via the transmission selecting circuitry 306 and the reception selecting circuitry 314.

The transmission selecting circuitry 306 may connect at least one of the first RAT processing unit 302 and the second RAT processing unit 304 to the transmission front end 308. The transmission selecting circuitry 306 may be implemented as a switch or a combiner. When the transmission selecting circuitry 306 is implemented as a switch, the transmission selecting circuitry 306 may selectively connect one of the first RAT processing unit 302 and the second RAT processing unit 304 to the transmission front end 308, at a certain point in time. When the transmission selecting circuitry 306 is implemented as a combiner, the transmission selecting circuitry 306 may connect both the first RAT processing unit 302 and the second RAT processing unit 304 to the transmission front end 308, at a certain point in time.

The transmission front end 308 may be a set of elements of an RF transmission path. The transmission front end 308 may include at least one element for analog signal processing. For example, the transmission front end 308 may include at least one of an oscillator, a mixer, and a power amplifier module (PAM). A duplexer 310 may separate a transmission signal and a reception signal. That is, the duplexer 310 may provide a signal received via an antenna to the reception front end 312, and may output a transmission signal provided from the transmission front end 308 to an antenna. For example, the duplexer 310 may be implemented as a circulator, a switch, or the like. The reception front end 312 may be a set of elements of an RF reception path. The transmission front end 308 may include at least one element for analog signal processing. For example, the transmission front end 308 may include at least one of an oscillator, a mixer, and a low noise amplifier (LNA).

The reception selecting circuitry 314 may connect at least one of the first RAT processing unit 302 and the second RAT processing unit 304 to the reception front end 312. The reception selecting circuitry 314 may be implemented as a switch or a divider. When the reception selecting circuitry 314 is implemented as a switch, the reception selecting circuitry 314 may selectively connect one of the first RAT processing unit 302 and the second RAT processing unit 304 to the reception front end 312, at a certain point in time. When the reception selecting circuitry 314 is implemented as a divider, the reception selecting circuitry 314 may connect both the first RAT processing unit 302 and the second RAT processing unit 304 to the reception front end 312, at a certain point in time.

Although not illustrated in FIG. 3, the transmission selecting circuitry 306 and the reception selecting circuitry 314 may be controlled by a separate control module (e.g., a path control module 344). That is, the transmission selecting circuitry 306 may connect at least one of the first RAT processing unit 302 and the second RAT processing unit 304 to the transmission front end 308 according to a provided control signal. Also, the reception selecting circuitry 314 may connect at least one of the first RAT processing unit 302 and the second RAT processing unit 304 to the reception front end 312 according to a provided control signal. Particularly, the PAM may be in the deactivated state in order to identify the state of another device (e.g., an adjacent base station) existing nearby via the reception front end 312, that is, a reception path, and to receive an uplink signal. In this instance, the duplexer 310 connected to an antenna may be connected to the reception front end 312, and a reception signal may be transferred to the reception selecting circuitry 314 via the reception front end 312.

Also, in addition to controlling the transmission selecting circuitry 306 and the reception selecting circuitry 314, the control module (e.g., the path control module 344) may control the operation states/modes of the first RAT processing unit 302 and the second RAT processing unit 304. In order to perform normal transmission/reception via a main path, that is, a common RF path, the first RAT processing unit 302 and the second RAT processing unit 304 may need to be controlled in parallel. For example, when the second RAT processing unit 304 is in the activated state, the first RAT processing unit 302 may be in the deactivated state. In this instance, the first RAT processing unit 302 and the second RAT processing unit 304 may share the transmission front end 308 via the transmission selecting circuitry 306.

In addition, the control module (e.g., the path control module 344) may control the transmission front end 308 and the reception front end 312. That is, while a reception operation is performed, the control module may change at least one element included into the transmission front end 308 to the deactivated state. Similarly, while a transmission operation is performed, the control module may change at least one element included in the reception front end 312 into the deactivated state.

In the above-described embodiments, the deactivated state may be defined variously. For example, the deactivated state may indicate various states or modes different from the normal state, such as a state in which power supply is disconnected, a state in which power is supplied but is disabled, a standby state, a sleep state, a state in which power consumption is decreased beyond a normal operation, a state in which some functions are partially disabled, and the like.

As described with reference to FIG. 3, the first RAT processing unit 302 and the second RAT processing unit 304 share an RF path. For example, the first RAT processing unit 302 may comply with the LTE standard, and the second RAT processing unit 304 may comply with the Wi-Fi standard. In this instance, an LTE signal path and a Wi-Fi signal path are designed for common use, and thus, an optimized hardware may be designed. Particularly, the number of components, such as a PAM, an LNA, an SW, and the like, included in an RF front end applied to a multimode system may be dramatically decreased. Accordingly, a cost and a space required may be reduced. Also, the number of active elements is decreased, and the amount of power consumed by the entire system may be decreased.

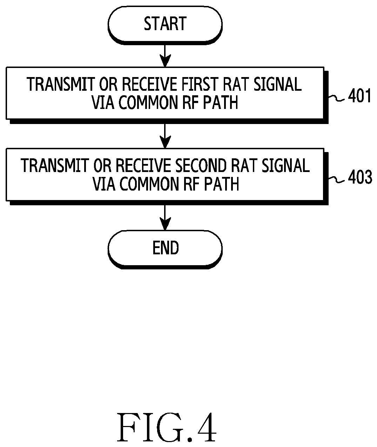

FIG. 4 is a diagram illustrating a method of operating a base station in a wireless communication system according to various embodiments of the disclosure. FIG. 4 illustrates the operation method of the base station 110.

Referring to FIG. 4, in operation 401, the base station may transmit or receive a signal based on a first RAT via a common RF path. That is, the base station may connect the common RF path to a hardware module (e.g., the first RAT processing unit 302) for the first RAT. Accordingly, the base station may transmit a signal based on the first RAT via the common RF path, or may provide a signal based on the first RAT to a hardware module for the first RAT via the common RF path.

Subsequently, in operation 403, the base station may transmit or receive a signal based on a second RAT via the common RF path. That is, in the state in which the common RF path is connected to a hardware module for the first RAT, the base station may perform control so that the common RF path is connected to a hardware module (e.g., the second RAT processing unit 304) for the second RAT. In this instance, the connection between the common RF path and the hardware module for the first RAT may be maintained or may be disconnected. Accordingly, the base station may transmit a signal based on the second RAT via the common RF path, or may provide a signal based on the second RAT to a hardware module for the second RAT via the common RF path.

As shown in the embodiment described with reference to FIG. 4, the base station may connect each of the hardware modules for the first RAT and the second RAT to the common RF path. In this instance, switching between the hardware module for the first RAT and the hardware module for the second RAT may be performed on the basis of information indicating RATs supported by terminals that access the base station, information indicating an RAT to which scheduled data is to be transmitted, the result of sensing or scanning performed in each RAT, and the like. Hereinafter, a detailed example of sensing and scanning and operations of a base station will be described.

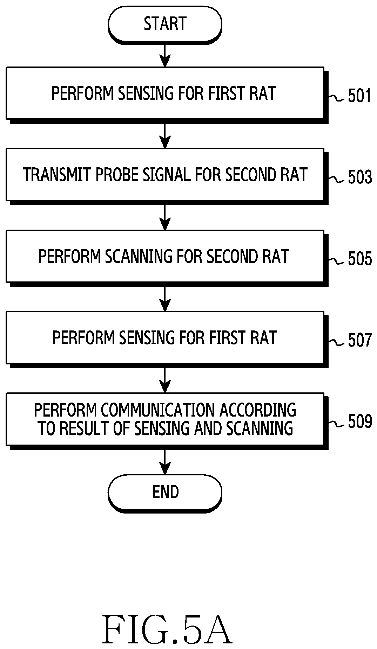

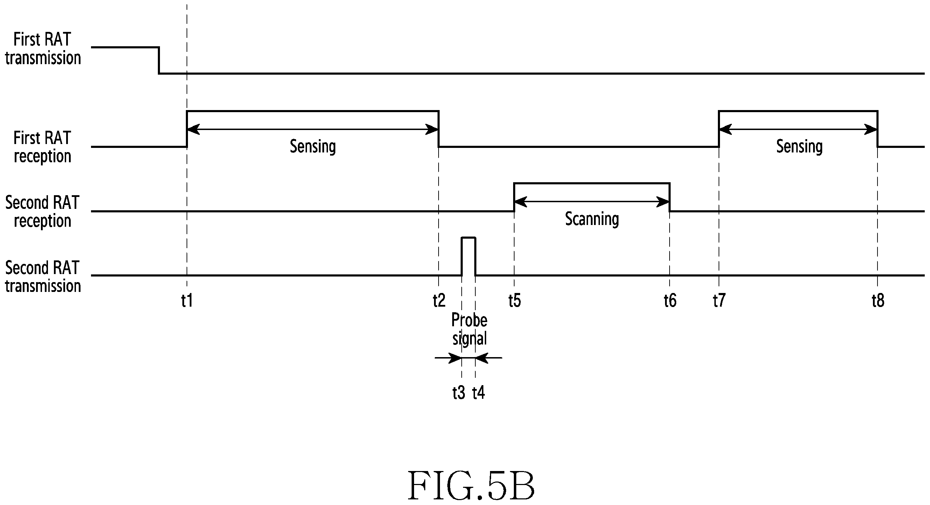

The disclosure of Figures 5A and 5B are not covered by the appended claims and is considered as not being part of the present invention.

FIG. 5A is a diagram illustrating a method of performing sensing and scanning in a wireless communication system according to various embodiments of the disclosure. FIG. 5A illustrates the operation method of the base station 110.

Referring to FIG. 5A, in operation 501, the base station performs sensing for a first RAT. The first RAT may be a technology that uses an unlicensed band. In this instance, the first RAT may be activated when another system does not occupy the corresponding band (e.g., 5GHz). Therefore, the base station performs sensing with respect to the corresponding band according to the LBT scheme. In other words, the base station may check whether another system that uses the corresponding band exists. According to various embodiments, the LBT may include clear channel assessment (CCA). To this end, a hardware module (e.g., the first RAT processing unit 302) for the first RAT may be connected to an RF reception path. Accordingly, as illustrated in FIG. 5B, during a first period from a point t1 to a point t2, the reception function of the first RAT may be activated. During the first period, the base station may detect a signal received using the hardware module for the first RAT, and depending on the case, may perform decoding.

In operation 503, the base station transmits a probe signal for a second RAT. The probe signal may be a signal defined by the protocol of the second RAT, and may request a response from an ambient communicable device. That is, the base station may transmit a signal that requires a response from another device that supports the second Rat. To this end, a hardware module (e.g., the second RAT processing unit 304) for the second RAT may be connected to an RF transmission path. Accordingly, as illustrated in FIG. 5B, during a second period from a point t3 to a point t4, the transmission function of the second RAT may be activated. During the second period, the base station may generate and transmit a probe signal using the hardware module for the second RAT.

In operation 505, the base station performs scanning for the second RAT. In other words, the base station may monitor whether a response signal to the probe signal is received. To this end, the hardware module for the second RAT may be connected to the RF reception path. Accordingly, as illustrated in FIG. 5B, during a third period from a point t5 to a point t6, the reception function of the second RAT may be activated. During the third period, the base station may detect and decode a reception signal using the hardware module for the second RAT.

In operation 507, the base station performs sensing for the first RAT. The base station may monitor again whether the corresponding band is occupied by another system. To this end, the hardware module for the first RAT may be connected to the RF reception path. Accordingly, as illustrated in FIG. 5B, during a fourth period from a point t7 to a point t8, the reception function of the first RAT may be activated. During the fourth period, the base station may detect a signal received using the hardware module for the first RAT, and depending on the case, may perform decoding.

Subsequently, in operation 509, the base station may perform communication according to the result of sensing and scanning. That is, on the basis of the result of sensing and scanning, the base station may determine an RAT to be used when performing communication. In addition, the base station may select an RAT to be used for communication further on the basis of at least one of the result of scheduling data transmission and an RAT supported by an accessed terminal. If the first RAT is selected, the base station may enable the CA function of a corresponding terminal, and may configure a secondary cell in a corresponding band. That is, depending on the result of sensing using a signal received via an RF path shared for two or more RATs, the base station may configure a secondary cell for a CA operation.

In the embodiments described with reference to FIGs. 5A and 5B, scanning for the first RAT and scanning for the second RAT may be performed during different periods. However, if the hardware module for the first RAT and the hardware module for the second RAT are connectable to the reception path (e.g., the reception front end 312) of the common RF path, in other words, if the reception path and two hardware modules are connected via a divider, a reception signal may be provided to the two hardware modules. In this instance, sensing with respect to the first RAT and scanning with respect to the second RAT may be performed in parallel. When the reception path and the two hardware modules are connectable in parallel, an example of sensing and scanning may be described as follows.

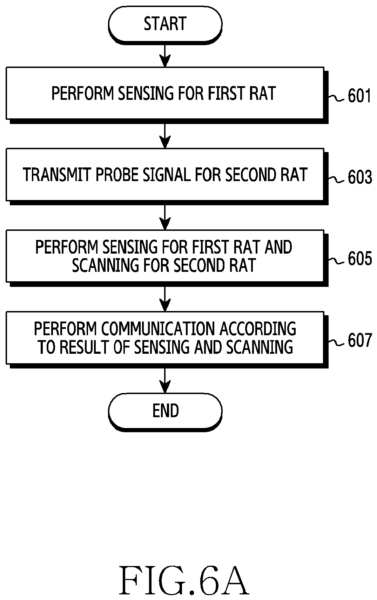

FIG. 6A is a diagram illustrating another method of performing sensing and scanning in a wireless communication system according to various embodiments of the disclosure. FIG. 6A illustrates the operation method of the base station 110.

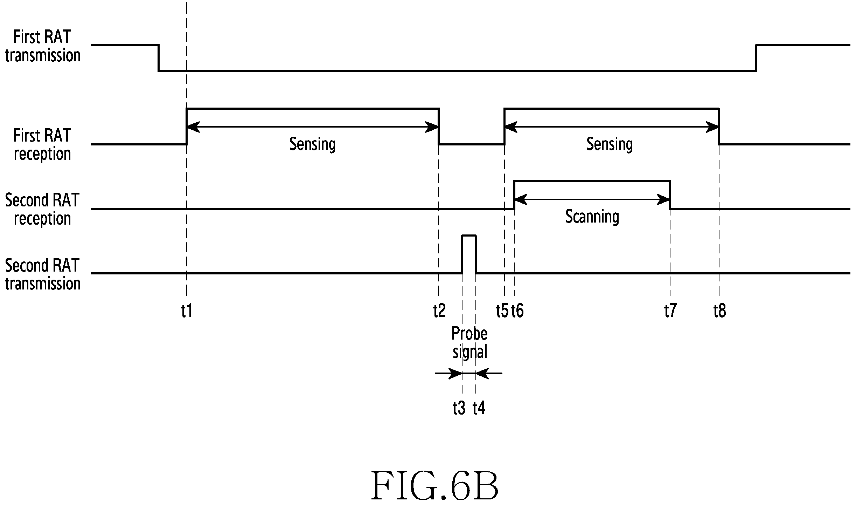

Referring to FIG. 6A, in operation 601, the base station performs sensing for a first RAT. The first RAT is a technology that uses an unlicensed band. In this instance, the first RAT is activated when another licensed system does not occupy the corresponding band (e.g., 5GHz). Therefore, the base station performs sensing with respect to the corresponding band according to the LBT scheme. In other words, the base station checks whether another system that uses the corresponding band exists. To this end, a hardware module (e.g., the first RAT processing unit 302) for the first RAT is connected to an RF reception path. Accordingly, as illustrated in FIG. 6B, during a first period from a point t1 to a point t2, the reception function of the first RAT is activated.

During the first period, the base station may detect a signal received using the hardware module for the first RAT, and depending on the case, may perform decoding.

In operation 603, the base station transmits a probe signal for a second RAT. The probe signal is a signal defined by the protocol of the second RAT, and requests a response from an ambient communicable device. That is, the base station transmits a signal that requires a response from another device that supports the second RAT. To this end, a hardware module (e.g., the second RAT processing unit 304) for the second RAT is connected to an RF transmission path. Accordingly, as illustrated in FIG. 6B, during a second period from a point t3 to a point t4, the transmission function of the second RAT is activated. During the second period, the base station generates and transmits a probe signal using the hardware module for the second RAT.

In operation 605, the base station Performs sensing for the first RAT, and performs scanning for the second RAT. In other words, the base station monitors whether the corresponding band is occupied by another system, and in parallel, monitors whether a response signal to the probe signal is received. To this end, the hardware module for the first RAT and the hardware module for the second RAT are connected to the RF reception path. Accordingly, as illustrated in FIG. 6B, during a third period from a point t5 to a point t8, the reception function of the first RAT is activated. Also, during a period from a point t6 to a point t7, which is at least a part of the third period, the reception function of the second RAT is activated.

Subsequently, in operation 607, the base station may perform communication according to the result of sensing and scanning. That is, on the basis of the result of sensing and scanning, the base station may determine an RAT to be used when performing communication. In addition, the base station may select an RAT to be used for communication further on the basis of at least one of the result of scheduling data transmission and an RAT supported by an accessed terminal. If the first RAT is selected, the base station may enable the CA function of a corresponding terminal, and may configure a secondary cell in a corresponding band.

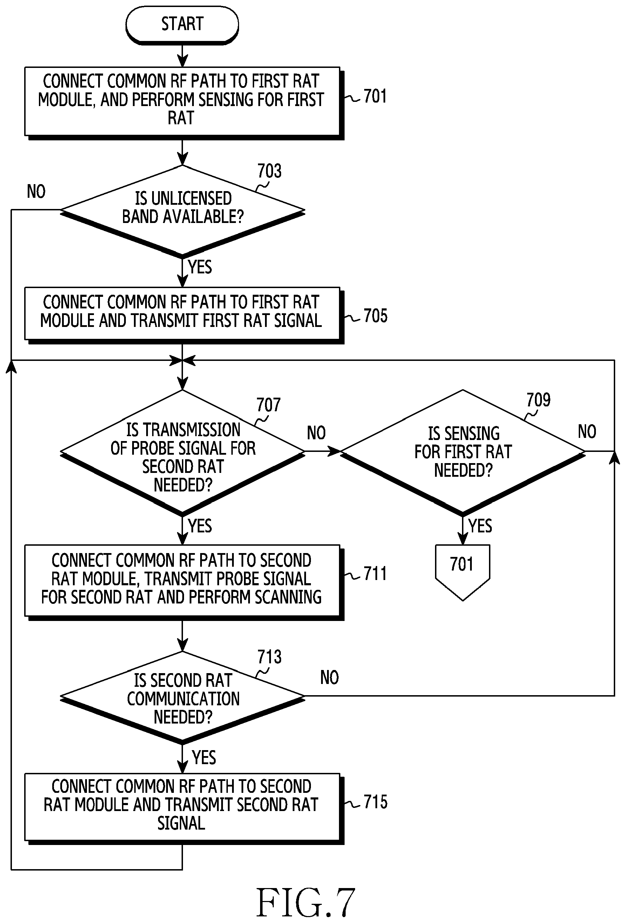

FIG. 7 is a diagram illustrating a method of operating a base station in a wireless communication system according to various embodiments of the disclosure. FIG. 7 illustrates the operation method of the base station 110.

Referring to FIG. 7, in operation 701, the base station may connect a common RF path to a hardware module for a first RAT, and may perform sensing for the first RAT. For example, the base station may control the reception selecting circuitry 314 so that the reception front end 312 is connected to the first RAT processing unit 302. In this instance, the transmission front end 308 and at least one element included in the second RAT processing unit 304 may be in the deactivated state.

Subsequently, in operation 703, the base station may determine whether an unlicensed band is available. That is, the base station may determine whether a signal from another system is detected on the basis of the result of sensing performed in operation 701. When a signal from another system or another device is not detected, the base station may determine that an unlicensed band is available.

If the unlicensed band is available, the base station may connect the common RF path to the hardware module for the first RAT, and may transmit a signal based on the first RAT in operation 705. In this instance, the signal based on the first RAT may be transmitted via a secondary cell configured for a corresponding terminal. That is, the base station transmits the signal based on the first RAT via a CA operation. In this instance, if only a part of the unlicensed band is available, the base station may transmit the signal based on the first RAT within an available frequency block. Although the unlicensed band is available, if data to be transmitted via the first RAT is not scheduled, operation 705 may be omitted.

In operation 707, the base station determines whether to transmit a probe signal for a second RAT. For example, the probe signal may be periodically transmitted. In this instance, the base station may determine whether a point for transmitting a probe signal arrives. In other words, the base station may determine whether a single period elapses from the last transmission of a probe signal.

If a probe signal for the second RAT does not need to be transmitted, the base station may determine whether sensing for the first RAT is needed in operation 709. For example, sensing for the first RAT may be periodically performed. In this instance, the base station may determine whether a point for performing sensing arrives. In other words, the base station may determine whether a single period elapses from the last sensing is performed. As another example, sensing for the first RAT may be performed when data to be transmitted via the first RAT exists. In this instance, the base station may determine whether data to be transmitted via the first RAT exists. In this instance, if sensing for the first RAT is not needed, the base station may return to operation 707. Unlike the above, if sensing for the first RAT is needed, the base station may return to operation 701.

If a probe signal for the second RAT needs to be transmitted, the base station may connect the common RF path to a hardware module for the second RAT, and may transmit a probe signal for the second RAT in operation 711. The base station performs scanning. That is, the base station monitors whether a response to the probe signal is received.

In operation 713, the base station determines whether communication based on the second RAT is needed. For example, if a response to the probe signal is received, the base station may determine that communication with a corresponding state is needed. As another example, if data to be transmitted via the second RAT is scheduled, the base station may determine that communication is needed. If communication based on the second RAT is not needed, the base station may return to operation 707.

If communication based on the second RAT is needed, the base station may connect the common RF path to the hardware module for the second RAT, and may transmit a signal based on the second RAT in operation 715. That is, the base station may generate a frame according to the standard of the second RAT, may convert the frame into a physical signal, and may transmit the physical signal via the common RF path and an antenna.

Methods according to embodiments stated in claims and/or specifications of the disclosure may be implemented in hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of the may form a memory in which the program is stored. Further, a plurality of such memories may be included in the electronic device.

In addition, the programs may be stored in an attachable storage device which is accessible through communication networks such as the Internet, Intranet, local area network (LAN), wide area network (WAN), and storage area network (SAN), or a combination thereof. Such a storage device may access the electronic device via an external port. Further, a separate storage device on the communication network may access a portable electronic device.

In the above-described detailed embodiments of the disclosure, a component included in the disclosure is expressed in the singular or the plural according to a presented detailed embodiment. However, the singular form or plural form is selected for convenience of description suitable for the presented situation, and various embodiments of the disclosure are not limited to a single element or multiple elements thereof. Further, either multiple elements expressed in the description may be configured into a single element or a single element in the description may be configured into multiple elements.

While the disclosure has been shown and described with reference to certain embodiments thereof, it will be understood by those skilled in the art that various changes in form and details may be made therein without departing from the scope of the disclosure. Therefore, the scope of the disclosure should not be defined as being limited to the embodiments, but should be defined by the appended claims.

## Claims

1. An apparatus for a base station (110) in a wireless communication system, the apparatus comprising:
a first processor (302) configured to process a signal for performing communication based on a first radio access technology, RAT;
a second processor (304) configured to process a signal for performing communication based on a second radio access technology, RAT;
a radio frequency, RF, path shared by the first processor and the second processor; and
a controller,
wherein the first RAT and the second RAT are used for communication in at least partially identical frequency bands,
wherein the first RAT uses an unlicensed band based on sensing,
wherein the controller is configured to perform a control to connect the second processor to a transmission front end of the RF path when a period for transmitting a probe signal for the second RAT arrives, and
wherein the controller is configured to perform a control to connect both the first processor and the second processor to a reception front end of the RF path in order to perform sensing for the first RAT while scanning a response to the probe signal;
wherein the probe signal is a signal defined by a protocol of the second RAT, requesting a response.

2. The apparatus of claim 1, further comprising: at least one selecting circuitry configured to connect at least one of the first processor and the second processor to the reception front end of the RF path.

3. The apparatus of claim 2, wherein the at least one selecting circuitry comprises a reception selecting circuitry and a transmission selecting circuitry,
wherein the reception selecting circuitry comprises a divider or a switch,
wherein the transmission selecting circuitry comprises a combiner or a switch.

4. The apparatus of claim 1, further comprising:
a controller configured to connect the first processor to the reception front end of the RF path when a period for performing sensing with respect to the unlicensed band for the first RAT arrives.

5. The apparatus of claim 4, wherein, the controller is configured to connect the first processor to the transmission front end of the RF path in order to transmit a signal via the unlicensed band when the unlicensed band is not occupied.

6. The apparatus of claim 5, wherein the controller is configured to configure a secondary cell for a carrier aggregation, CA, operation in the unlicensed band when the unlicensed band is not occupied.

7. The apparatus of claim 1, wherein the first RAT is an access technology that uses an unlicensed band according to a listen before talk, LBT, algorithm, and wherein the second RAT is a wireless local area network.

8. A method executed by an apparatus for a base station in a wireless communication system, the method comprising:
connecting a second processor to a transmission front end of a radio frequency, RF, path when a period for transmitting a probe signal for a second radio access technology, RAT, arrives,
connecting both a first processor and the second processor to a reception front end of the RF path in order to perform sensing for a first radio access technolohy, RAT, and to scan a response to the probe signal after transmitting the probe signal
wherein the first processor is used to process a signal for performing communication based on the first RAT,
wherein the second processor is used to process a signal for performing communication based on the second RAT,
wherein the RF path is shared by the first processor and the second processor,
wherein the first RAT and the second RAT are used for communication in at least partially identical frequency bands,
wherein the first RAT uses an unlicensed band based on sensing;
wherein the probe signal is a signal defined by a protocol of the second RAT, requesting a response.

9. The method of claim 8, further comprising:
connecting at least one of the first processor and the second processor to the reception front end of the RF path by at least one selecting circuitry.

10. The method of claim 8, further comprising:
connecting the first processor to the reception front end of the RF path when a period for performing sensing with respect to the unlicensed band for the first RAT arrives.

11. The method of claim 8, wherein the first RAT is an access technology that uses an unlicensed band according to a listen before talk, LBT, algorithm, and wherein the second RAT is a wireless local area network.

## Patentansprüche

1. Vorrichtung für eine Basisstation (110) in einem Drahtloskommunikationssystem, wobei die Vorrichtung umfasst:
einen ersten Prozessor (302), dazu konfiguriert, ein Signal zur Durchführung einer Kommunikation auf der Grundlage einer ersten Funkzugangstechnologie, *radio access technology* - RAT, zu verarbeiten;
einen zweiten Prozessor (304), dazu konfiguriert, ein Signal zur Durchführung einer Kommunikation auf der Grundlage einer zweiten Funkzugangstechnologie, *radio access technology* - RAT, zu verarbeiten;
einen Funkfrequenzweg, *radio frequency-* RF, RF-Weg, gemeinsam genutzt durch den ersten Prozessor und den zweiten Prozessor; und
eine Steuereinrichtung,
wobei die erste RAT und die zweite RAT zur Kommunikation in zumindest teilweise identischen Frequenzbändern verwendet werden,
wobei die erste RAT ein nicht lizenziertes Band auf der Grundlage eines Abfühlens verwendet,
wobei die Steuereinrichtung dazu konfiguriert ist, eine Steuerung durchzuführen, um den zweiten Prozessor mit einem Übertragungseingangsteil des RF-Weges zu verbinden, wenn eine Periode zum Übertragen eines Sondensignals für die zweite RAT herankommt, und
wobei die Steuereinrichtung dazu konfiguriert ist, eine Steuerung durchzuführen, um sowohl den ersten Prozessor als auch den zweiten Prozessor mit einem Empfangseingangsteil des RF-Weges zu verbinden, um ein Abfühlen für die erste RAT während eines Scannens einer Antwort auf das Sondensignal durchzuführen;
wobei das Sondensignal ein durch ein Protokoll der zweiten RAT bestimmtes Signal ist, das eine Antwort anfordert.

2. Vorrichtung nach Anspruch 1, ferner umfassend:
mindestens eine Auswahlschaltung, dazu konfiguriert, mindestens einen aus dem ersten Prozessor und dem zweiten Prozessor mit dem Empfangseingangsteil des RF-Weges zu verbinden.

3. Vorrichtung nach Anspruch 2, wobei die mindestens eine Auswahlschaltung eine Empfangsauswahlschaltung und eine Übertragungsauswahlschaltung umfasst,
wobei die Empfangsauswahlschaltung einen Teiler oder eine Weiche umfasst,
wobei die Übertragungsauswahlschaltung einen Kombinierer oder eine Weiche umfasst.

4. Vorrichtung nach Anspruch 1, ferner umfassend:
eine Steuereinrichtung, dazu konfiguriert, den ersten Prozessor mit dem Empfangseingangsteil des RF-Weges zu verbinden, wenn eine Periode zum Durchführen eines Abfühlens bezüglich des nicht lizenzierten Bandes für die erste RAT herankommt.

5. Vorrichtung nach Anspruch 4, wobei die Steuereinrichtung dazu konfiguriert ist, den ersten Prozessor mit dem Übertragungseingangsteil des RF-Weges zu verbinden, um ein Signal über das nicht lizenzierte Band zu übertragen, wenn das nicht lizenzierte Band nicht belegt ist.

6. Vorrichtung nach Anspruch 5, wobei die Steuereinrichtung dazu konfiguriert ist, eine Sekundärzelle für eine Trägeraggregationsoperation, *carrier aggregation* - CA, CA-Operation, in dem nicht lizenzierten Band zu konfigurieren, wenn das nicht lizenzierte Band nicht belegt ist.

7. Vorrichtung nach Anspruch 1, wobei die erste RAT eine Zugangstechnologie ist, die ein nicht lizenziertes Band gemäß einem Listen Before Talk-Algorithmus, LBT-Algorithmus, verwendet, und
wobei die zweite RAT ein drahtloses lokales Netzwerk (Wireless Local Area Network) ist.

8. Verfahren, ausgeführt durch eine Vorrichtung für eine Basisstation in einem Drahtloskommunikationssystem, wobei das Verfahren umfasst:
Verbinden eines zweiten Prozessors mit einem Übertragungseingangsteil eines Funkfrequenzweges, *radio frequency-* RF, RF-Weges, wenn eine Periode zum Übertragen eines Sondensignals für eine zweite Funkzugangstechnologie, *radio access technology-*RAT, herankommt,
Verbinden sowohl eines ersten Prozessors als auch des zweiten Prozessors mit einem Empfangseingangsteil des RF-Weges, um ein Abfühlen für eine erste Funkzugangstechnologie, *radio access technology* - RAT, durchzuführen und eine Antwort auf das Sondensignal zu scannen, nach dem Übertragen des Sondensignals,
wobei der erste Prozessor dazu verwendet wird, ein Signal zur Durchführung einer Kommunikation auf der Grundlage der ersten RAT zu verarbeiten,
wobei der zweite Prozessor dazu verwendet wird, ein Signal zur Durchführung einer Kommunikation auf der Grundlage der zweiten RAT zu verarbeiten,
wobei der RF-Weg durch den ersten Prozessor und den zweiten Prozessor gemeinsam genutzt wird,
wobei die erste RAT und die zweite RAT zur Kommunikation in zumindest teilweise identischen Frequenzbändern verwendet werden,
wobei die erste RAT ein nicht lizenziertes Band auf der Grundlage eines Abfühlens verwendet;
wobei das Sondensignal ein durch ein Protokoll der zweiten RAT bestimmtes Signal ist, das eine Antwort anfordert.

9. Verfahren nach Anspruch 8, ferner umfassend:
Verbinden mindestens eines aus dem ersten Prozessor und dem zweiten Prozessor mit dem Empfangseingangsteil des RF-Weges durch mindestens eine Auswahlschaltung.

10. Verfahren nach Anspruch 8, ferner umfassend:
Verbinden des ersten Prozessors mit dem Empfangseingangsteil des RF-Weges, wenn eine Periode zum Durchführen eines Abfühlens bezüglich des nicht lizenzierten Bandes für die erste RAT herankommt.

11. Verfahren nach Anspruch 8, wobei die erste RAT eine Zugangstechnologie ist, die ein nicht lizenziertes Band gemäß einem Listen Before Talk-Algorithmus, LBT-Algorithmus, verwendet, und
wobei die zweite RAT ein drahtloses lokales Netzwerk (Wireless Local Area Network) ist.

## Revendications

1. Appareil pour une station de base (110) dans un système de communication sans fil, l'appareil comprenant :
un premier processeur (302) configuré pour traiter un signal pour réaliser une communication sur la base d'une première technologie d'accès radio, *radio access technology* - RAT ;
un deuxième processeur (304) configuré pour traiter un signal pour réaliser une communication sur la base d'une deuxième technologie d'accès radio, *radio access technology* - RAT ;
un chemin de fréquence radio, *radio frequency-* RF, partagé par le premier processeur et le deuxième processeur ; et
un contrôleur,
dans lequel la première RAT et la deuxième RAT sont utilisées pour une communication dans des bandes de fréquence au moins partiellement identiques,
dans lequel la première RAT utilise une bande sans licence basée sur la détection,
dans lequel le contrôleur est configuré pour réaliser un contrôle pour connecter le deuxième processeur à une extrémité avant de transmission du chemin RF lorsqu'une période de transmission d'un signal de sonde pour la deuxième RAT arrive, et
dans lequel le contrôleur est configuré pour réaliser un contrôle pour connecter à la fois le premier processeur et le deuxième processeur à une extrémité avant de réception du chemin RF afin de réaliser une détection pour la première RAT tout en balayant une réponse au signal de sonde ;
dans lequel le signal de sonde est un signal défini par un protocole de la deuxième RAT, demandant une réponse.

2. Appareil selon la revendication 1, comprenant en outre :
au moins un circuit de sélection configuré pour connecter au moins un parmi le premier processeur et le deuxième processeur à l'extrémité avant de réception du chemin RF.

3. Appareil selon la revendication 2, dans lequel l'au moins un circuit de sélection comprend un circuit de sélection de réception et un circuit de sélection de transmission,
dans lequel le circuit de sélection de réception comprend un diviseur ou un commutateur,
dans lequel le circuit de sélection de transmission comprend un combinateur ou un commutateur.

4. Appareil selon la revendication 1, comprenant en outre :
un contrôleur configuré pour connecter le premier processeur à l'extrémité avant de réception du chemin RF lorsqu'une période de réalisation d'une détection par rapport à la bande sans licence pour la première RAT arrive.

5. Appareil selon la revendication 4, dans lequel le contrôleur est configuré pour connecter le premier processeur à l'extrémité avant de transmission du chemin RF afin de transmettre un signal via la bande sans licence lorsque la bande sans licence n'est pas occupée.

6. Appareil selon la revendication 5, dans lequel le contrôleur est configuré pour configurer une cellule secondaire pour une opération d'agrégation de porteuses, *carrier aggregation* - CA, dans la bande sans licence lorsque la bande sans licence n'est pas occupée.

7. Appareil selon la revendication 1, dans lequel la première RAT est une technologie d'accès qui utilise une bande sans licence selon un algorithme d'écoute avant de parler, *listen before talk -* LBT, et
dans lequel la deuxième RAT est un réseau local sans fil.

8. Procédé exécuté par un appareil pour une station de base dans un système de communication sans fil, le procédé comprenant :
la connexion d'un deuxième processeur à une extrémité avant de transmission d'un chemin de fréquence radio, *radio frequency-* RF, lorsqu'une période de transmission d'un signal de sonde pour une deuxième technologie d'accès radio, *radio access technology -* RAT, arrive,
la connexion à la fois d'un premier processeur et du deuxième processeur à une extrémité avant de réception du chemin RF afin de réaliser une détection pour une première technologie d'accès radio, *radio access technology* - RAT, et de balayer une réponse au signal de sonde après la transmission du signal de sonde,
dans lequel le premier processeur est utilisé pour traiter un signal pour réaliser une communication sur la base de la première RAT,
dans lequel le deuxième processeur est utilisé pour traiter un signal pour réaliser une communication sur la base de la deuxième RAT,
dans lequel le chemin RF est partagé par le premier processeur et le deuxième processeur,
dans lequel la première RAT et la deuxième RAT sont utilisées pour une communication dans des bandes de fréquence au moins partiellement identiques,
dans lequel la première RAT utilise une bande sans licence basée sur la détection ;
dans lequel le signal de sonde est un signal défini par un protocole de la deuxième RAT, demandant une réponse.

9. Procédé selon la revendication 8, comprenant en outre :
la connexion d'au moins un parmi le premier processeur et le deuxième processeur à l'extrémité avant de réception du chemin RF par au moins un circuit de sélection.

10. Procédé selon la revendication 8, comprenant en outre :
la connexion du premier processeur à l'extrémité avant de réception du chemin RF lorsqu'une période de réalisation d'une détection par rapport à la bande sans licence pour la première RAT arrive.

11. Appareil selon la revendication 8, dans lequel la première RAT est une technologie d'accès qui utilise une bande sans licence selon un algorithme d'écoute avant de parler, *listen before talk -* LBT, et
dans lequel la deuxième RAT est un réseau local sans fil.
